Europäisches Patentamt

European Patent Office

Office européen des brevets

(11) Veröffentlichungsnummer : **0 075 847**
**B1**

(12) EUROPÄISCHE PATENTSCHRIFT

(45) Veröffentlichungstag der Patentschrift :
20.08.86

(51) Int. Cl.⁴ : **G 01 L 25/00, G 01 L 27/00**

(21) Anmeldenummer : 82108746.7

(22) Anmeldetag : 22.09.82

(54) **Hydraulische Kraft-Normalmaschine.**

(30) Priorität : 25.09.81 DE 3138170

(43) Veröffentlichungstag der Anmeldung :
06.04.83 Patentblatt 83/14

(45) Bekanntmachung des Hinweises auf die Patenterteilung : 20.08.86 Patentblatt 86/34

(84) Benannte Vertragsstaaten :
AT BE CH FR GB IT LI NL SE

(56) Entgegenhaltungen :
DE-A- 2 654 330
US-A- 2 766 612
US-A- 3 148 528
FEINWERKTECHNIK, Band 60, Nr. 3, 1956, Seiten 101-
106, München, DE. J. REIMPELL: "Kolbendruckwaagen zur Prüfung von Federmanometern"
Dissertation M. Peters, eingereicht am 16.06.78 bei
der Technischen Universität Carolo-Wilhelmina,
Braunschweig, S. 7-10
Die Akte enthält technische Angaben, die nach dem
Eingang der Anmeldung eingereicht wurden und die
nicht in dieser Patentschrift enthalten sind.

(73) Patentinhaber : A. M. Erichsen GmbH
Wittensteinstrasse 53
D-5600 Wuppertal 2 (DE)

(72) Erfinder : Baethke, Klaus
Distelbusch 18
D-5620 Velbert 1 (DE)

(74) Vertreter : Peerbooms, Rudolf, Dipl.-Phys.
Postfach 200 208 Dickmannstrasse 45C
D-5600 Wuppertal 2 (DE)

**Beschreibung**

Die Erfindung betrifft eine hydraulische Kraftnormal-Maschine mit einem in einem Arbeitszylinder aufgenommenen Arbeitskolben, welcher an einer Stirnseite vom Ausgangsdruck eines hydraulischen Meßsystems mit einem durch Meßgewichte belasteten Meßkolben beaufschlagt wird.

Derartige Kraftnormal-Maschinen sind durch die Dissertationsarbeit von Dipl.-Phys. Manfred Peters, eingereicht am 16. Juni 1978 bei der Technischen Universität Carolo-Wilhelmina zu Braunschweig, bekannt.

Mit Kraftnormal-Maschinen werden Kräfte erzeugt, die zur Kalibrierung von Kraft-Meßgeräten dienen. Während kleinere Kräfte noch unmittelbar durch Meßgewichte dargestellt werden können, kommt aus technischen und wirtschaftlichen Erwägungen für größere Kräfte, z. B. Kräfte > 1 MN, nur eine Krafterzeugung durch hydraulische Übersetzung in Betracht. In erster Näherung wird hierbei das Übersetzungsverhältnis durch die beiden wirksamen Kolbenstirnflächen von Meßkolben und Arbeitskolben bestimmt. In der Praxis weicht das Übersetzungsverhältnis jedoch von dem mathematischen Flächenverhältnis mehr oder weniger stark ab, da auf das Übersetzungsverhältnis auch andere Parameter wie Dichtspaltweite, Dichtspaltlänge und die daraus sich ergebene Leckströmung einwirken. Solche Störparameter sind mathematisch kaum erfaßbar. Um ein vorgeschriebenes Übersetzungsverhältnis zu realisieren oder um mehrere Kraftnormal-Maschinen mit identischen Übersetzungsverhältnissen zu erreichen, werden nach dem Stand der Technik am Arbeitszylinder und/oder Arbeitskolben vielfach sehr umfangreiche Nacharbeiten ausgeführt, was aber mit zunehmender Nennkraft zeit- und kostenaufwendiger wird. Eine Anpassung ist auch schon versucht worden, indem man Hilfsabgleichgewichte den Meßgewichten angefügt hat. Aber auch dies ist ein aufwendiges und fehlerbehaftetes Verfahren.

Durch die DE-A-26 54 330 ist eine Einrichtung zur Graduierung oder Eichung von Dynamometern bekannt, bei welcher ein Arbeitskolben an einer Stirnseite mit dem Meßdruck beaufschlagt wird und mit seiner anderen Seite über einen Rahmen auf das zu eichende Dynamometer einwirkt. Der Rahmen ist hierfür über zwei parallele Kraftübertragungswege an die Rückseite des Arbeitskolbens angeschlossen, und zwar über ein geeichtes Normaldynamometer, dessen Meßbereich nur ein Bruchteil des Meßbereiches des zu eichenden Gerätes beträgt, und über ein hydraulisches Kompensationssystem. Jedesmal, wenn dort der Meßdruck entsprechend dem Meßbereich des Normaldynamometers erhöht worden ist, wird mittels des hydraulischen Kompensationssystems das Normaldynamometer wieder entlastet, so daß danach der Meßdruck wiederum um einen dem Meßbereich des Normaldynamometers entsprechenden Betrag erhöht werden kann. Bei der bekannten Anordnung sind zwei, gegeneinander wirkende Drucksysteme erforderlich, was einerseits den Aufwand erhöht und zum anderen einen Hysteresefehler verursacht, der die erreichbare Meßgenauigkeit auf einen Relativfehler von $3 \times 10^{-3}$ begrenzt, während bei hydraulischen Kraftnormalmaschinen der gattungsgemäßen Art eine Meßgenauigkeit von etwa $3 \times 10^{-4}$ angestrebt wird. Darüberhinaus ist die bekannte Anordnung nicht dazu geeignet, einen genauen ganzzahligen Übersetzungsfaktor bei der Meßdruckübersetzung zu ermöglichen, so daß beispielsweise an ein und dieselbe Meßdruckquelle mehrere Kraftnormal-Maschinen angeschlossen werden können, die beispielsweise exakt die Übersetzungen 1 : 20, 1 : 50 und 1 : 100 liefern.

Durch die US-A-3 148 528 und die US-A-2 766 612 sind schließlich Arbeitskolben bekannt, die an ihrer vom Meß-Ausgangsdruck beaufschlagten Stirnseite weitere, kleinere Arbeitskolben tragen, deren druckbeaufschlagte Wirkflächen in weiteren Druckkammern liegen. Bei dieser Anordnung kann durch die Beaufschlagung jeweils eines oder mehrerer der Arbeitskolben zwischen verschiedenen Meßbereichen gewählt werden. Eine Feinabstimmung der einzelnen Wirkflächen ist jedoch nicht möglich.

Durch « J. Reimpell, Feinwerktechnik, Band 60, Nr. 3, 1956, Seite 102 f » ist eine Kolbendruckwaage bekannt, bei welcher Zylinder und Kolben auswechselbar sind. Auch diese Einrichtung ermöglicht lediglich eine Änderung des Meßbereiches, nicht aber eine Feinkalibrierung der Wirkfläche.

Der Erfindung liegt die Aufgabe zugrunde, die Anpaßbarkeit von hydraulischen Kraftnormal-Maschinen an eingefordertes Übersetzungsverhältnis zu vereinfachen.

Zur Lösung dieser Aufgabe ist erfindungsgemäß vorgesehen, daß der Arbeitskolben an seiner von Meß-Ausgangsdruck beaufschlagten Stirnseite einen im Durchmesser wesentlich kleineren, leicht ausbaubaren Abgleichzapfen zur Feinabstimmung der Wirkfläche des Arbeitskolbens trägt, wobei der Abgleichzapfen in einer auswechselbar im Arbeitszylinder angeordneten Führungsbuchse geführt ist.

Durch den Abgleichzapfen bleibt nur eine Ringfläche des Arbeitskolbens druckwirksam, deren Größe entsprechend dem gewünschten Übersetzungsverhältnis bemessen wird. Die Erfindung bietet den Vorteil, daß die im Hinblick auf die eingangs geschilderten Störparameter erforderliche genaue Anpassung nunmehr durch Nachbearbeiten oder Auswechseln des Abgleichzapfens und seiner Führungsbuchse vorgenommen werden kann, also an vergleichsweise kleinen Bauteilen, die in der montagemäßigen Handhabung und in der Nachbearbeitung wesentlich einfacher handhabbar sind. Hierdurch werden die Kosten der Anpaßarbeiten beträchtlich gesenkt.

2

was angesichts ihres hohen Anteils an den Gesamtherstellkosten solcher Kraftnormal-Maschinen von erheblicher Bedeutung ist.

In Ausgestaltung der Erfindung kann vorgesehen werden, daß der Abgleichzapfen mittels einer ihn axial durchsetzenden Kopfschraube am Arbeitskolben angeschraubt ist. Diese Befestigungsart ist preiswert in der Herstellung und bequem in der Handhabung.

In der Weiterbildung der Erfindung kann vorgesehen werden, daß der Arbeitszylinder auf einem Lager aufsitzt, welches mit einer Durchgangsöffnung zum Ausbau der Führungsbuchse und/oder des Arbeitskolbens versehen ist. Durch diese Maßnahme ist es möglich, die Anpaßarbeiten lediglich unter Ausbau von Abgleichzapfen und Führungsbuchse auszuführen, während jede weitere Teildemontage der Kraftnormal-Maschine entfällt.

Schließlich können der Erfindung zufolge noch am Ende des Dichtspaltes von Arbeitskolben und Abgleichzapfen jeweils im Anschluß an Leckölableitungen je ein hydrostatisches Druckölager angeordnet sein. Durch diese Maßnahme sind die Kolbenteile einwandfrei in den Zylinderteilen zentriert, was bei bekannten Plungerzylindern überwiegend durch Rotation von Kolben oder Zylinder bewirkt, daß ein hydrodynamischer Ölfilm zwischen Kolben und Zylinder aufgebaut wird. Auch hydrostatische Hilfen sind bei reinen Plungerzylindern bekannt, jedoch ist es hierbei nicht möglich, das hydrostatische Lager an der dem Öldruck zugewandten Seite vom präzisen Dichtspalt abzukoppeln, um Störungen des Druckverlaufes im kalibrierten Dichtspalt zu vermeiden. Die hydrostatische Lagerung von Arbeits- und Abgleichkolben ersetzt somit den Drehantrieb mit seinen bekannten negativen Eigenschaften wie Taumeln und Reibungsstörungen vom Antrieb her.

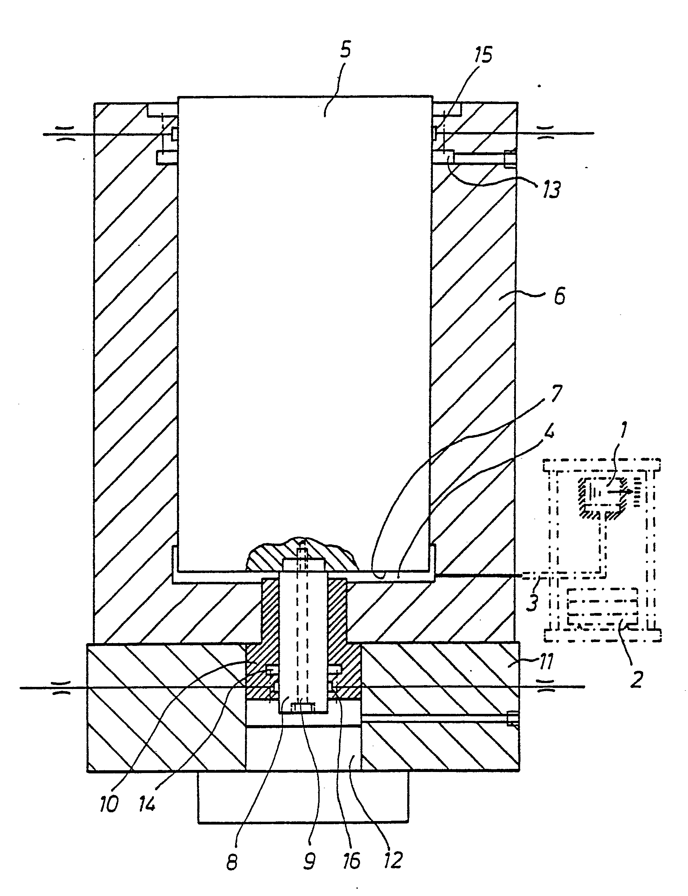

Die Erfindung wird im folgenden anhand eines in der Zeichnung dargestellten Ausführungsbeispieles näher erläutert.

In der Zeichnung ist rechts in strichpunktierten Linien und in stark verkleinertem Maßstab ein hydraulisches Meßsystem gezeigt mit einem Meßkolben 1, der durch Meßgewichte 2 belastet ist und über die Druckmittelleitung 3 einen bestimmten hydraulischen Meßdruck liefert, der in den Zylinderraum 4 der in vollen Linien dargestellten Kraftnormal-Maschine nach der Erfindung eingeleitet wird.

Die Kraftnormal-Maschine besitzt einen verhältnismäßig großen Arbeitskolben 5, der mit engem Spiel in einem Arbeitszylinder 6 geführt ist.

An die vom Meßdruck beaufschlagte Stirnfläche 7 des Arbeitskolbens 5 ist zentral ein vergleichsweise kleiner Abgleichzapfen 8 mittels einer den Abgleichzapfen axial durchsetzenden Kopfschraube 9 angeschraubt, welcher in einer Führungsbuchse 10 geführt ist, die dicht aber leicht auswechselbar in einem Bodendurchbruch des Arbeitszylinders 6 sitzt. Der Arbeitszylinder 6 ist auf einer Lagerplatte 11 abgestützt, welche mit einer Durchgangsöffnung 12 zum Ausbau der Führungsbuchse 10 versehen ist.

Der Zylinderraum 4 ist durch den Dichtspalt zwischen Arbeitskolben 5 und Arbeitszylinder 6 und den Dichtspalt zwischen Abgleichzapfen 8 und Führungsbuchse 10 abgedichtet, wobei zur Aufrechterhaltung einer definitiven, konstanten Leckströmung jeweils kurz vor dem Ende der Dichtspalte Leckölableitungen 13, 14 in Form von Ringnuten im Arbeitszylinder 6 bzw. in der Führungsbuchse 10 vorgesehen sind. Im Anschluß daran ist sowohl am Arbeitszylinder 6 als auch an der Führungsbuchse 10 je ein hydrostatisches Lager 15 bzw. 16 angeordnet.

## Patentansprüche

1. Hydraulische Kraftnormal-Maschine mit einem in einem Arbeitszylinder (6) aufgenommenen Arbeitskolben (5), welcher an einer Stirnseite (7) vom Ausgangsdruck eines hydraulischen Meßsystems mit einem durch Meßgewichte (2) belasteten Meßkolben (1) beaufschlagt wird, dadurch gekennzeichnet, daß der Arbeitskolben (5) an seiner vom Meß-Ausgangsdruck beaufschlagten Stirnseite (7) einen im Durchmesser wesentlich kleineren, leicht ausbaubaren Abgleichzapfen (8) zur Feinabstimmung der Wirkfläche des Arbeitskolbens (5) trägt, wobei der Abgleichzapfen (8) in einer auswechselbar im Arbeitszylinder (6) angeordneten Führungsbuchse (10) geführt ist.

2. Kraftnormal-Maschine nach Anspruch 1, dadurch gekennzeichnet, daß der Arbeitskolben (5) und der Abgleichzapfen (8) koaxial angeordnet sind.

3. Kraftnormal-Maschine nach einem der Ansprüche 1 oder 2, dadurch gekennzeichnet, daß der Arbeitszylinder (6) auf einem Lager (11) aufsitzt, welches mit einer Durchgangsöffnung (12) zum Ausbau der Führungsbuchse (10) versehen ist.

4. Kraftnormal-Maschine nach den Ansprüchen 1, 2 oder 3, dadurch gekennzeichnet, daß der Abgleichzapfen (8) mittels einer ihn axial durchsetzenden Kopfschraube (9) am Arbeitskolben (5) angeschraubt ist.

5. Kraftnormal-Maschine nach einem oder mehreren der Ansprüche 1 bis 4, dadurch gekennzeichnet, daß am Ende des Dichtspaltes zwischen arbeitendem Zylinder und Arbeitskolben (5) und des Dichtspaltes zwischen Führungsbuchse (10) und Abgleichzapfen (8) jeweils im Anschluß an Leckölableitungen (13, 14) je ein hydrostatisches Druckölager (15, 16) angeordnet ist.

## Claims

1. Hydraulic force standard machine having a working piston (5) arranged in a working cylinder (6), the working piston (5) being pressure-loaded at one front side (7) by the output pressure of a hydraulic measuring system, having a measuring piston (1) loaded by standard weights (2), characterised in that the working piston (5) is carrying at its front side (7) an easily detachable adjusting plug (8) having an essentially smaller diameter for a precision adjustment of the effective area of the working piston (5), wherein the adjusting plug (8) is guided in a guiding sleeve (10), which is replaceable arranged in the working cylinder (6).

2. Force standard machine according to claim 1, characterised in that the working piston (5) and the adjusting plug (8) are coaxially arranged.

3. Force standard machine according to one of the claims 1 or 2, characterised in that the working cylinder (6) is resting upon a support (11) having a through bore (12) for the replacement of the guiding sleeve (10).

4. Force standard machine according to the claims 1, 2 or 3, characterised in that the adjusting plug (8) is screwed on the working piston (5) by a cap screw (9) axially penetrating the adjusting plug (8).

5. Force standard machine according to one or several of the claims 1 to 4, characterised in that at the end of the sealing gap between the working cylinder (6) and the working piston (5) and of the sealing gape between the guiding sleeve (10) and the adjusting plug (8) respectively following to leak oil discharge lines (13, 14) for each gap is arranged a hydrostatic forced-lubriation bearing (15, 16).

**Revendications**

1. Machine hydraulique de production d'étalon de force, comportant un piston de travail (5) logé dans un cylindre de travail (6), et qui est soumis sur sa face frontale (7) à la pression de sortie d'un système de mesure hydraulique à piston de mesure (1) chargé par des poids étalons (2), caractérisée par le fait que le piston de travail (5) porte, sur sa face frontale (7) soumise à la pression de sortie du système de mesure, un tenon de tarage (8) pour le réglage de précision de la surface effective du piston de travail (5), le tenon de tarage (8) étant en diamètre essentiellement plus petit en comparaison de piston de travail (5), étant simplement démontable et étant guidé dans une douille de guidage (10) montée amovible dans le cylindre de travail (6).

2. Machine d'étalon de force selon la revendication 1, caractérisée par le fait que le piston de travail (5) et le tenon de tarage (8) sont coaxiaux.

3. Machine d'étalon de force selon l'une des revendications 1 ou 2, caractérisée par le fait que le cylindre de travail (6) repose sur un support (11) qui est muni d'un orifice de passage (12) permettant l'enlèvement de la douille de guidage (10).

4. Machine d'étalon de force selon les revendications 1, 2 ou 3 caractérisée par le fait que le tenon de tarage (8) est fixé au piston de travail (5), au moyen d'une vis à tête (9) le traversant axialement.

5. Machine d'étalon de force selon l'une des revendications 1 à 4, caractérisée par le fait qu'à l'extrémité de l'interstice de jonction entre cylindre de travail et piston de travail (5) et à celle de l'interstice de jonction entre douille de guidage (10) et tenon de tarage (8), sont ménagés, respectivement, aux raccordements des dérivations d'huile de fuite (13, 14), des paliers à huile sous pression, hydrostatiques (15, 16).